(19) Europäisches Patentamt
European Patent Office
Office européen des brevets

(11) **EP 4 346 066 B1**

(12) **EUROPEAN PATENT SPECIFICATION**

(45) Date of publication and mention
of the grant of the patent:
**25.06.2025 Bulletin 2025/26**

(21) Application number: **23191906.9**

(22) Date of filing: **17.08.2023**

(51) International Patent Classification (IPC):
*H02J 50/12* (2016.01)      *H02J 50/80* (2016.01)

(52) Cooperative Patent Classification (CPC):
**H02J 50/12; H02J 50/80**

(54) **POWER REGULATION IN WIRELESS POWER TRANSMITTER**

LEISTUNGSREGELUNG IN EINEM DRAHTLOSEN STROMSENDER

RÉGULATION DE PUISSANCE DANS UN ÉMETTEUR DE PUISSANCE SANS FIL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.09.2022 US 202217941199**

(43) Date of publication of application:
**03.04.2024 Bulletin 2024/14**

(73) Proprietors:
• **STMicroelectronics Asia Pacific Pte Ltd.**
**Singapore 554574 (SG)**
• **STMicroelectronics International N.V.**
**1228 Plan-les-Ouates, Geneva (CH)**

(72) Inventors:
• **KARUPPUSAMY, Baranidharan**
**Singapore 560121 (SG)**
• **BHANUSHALI, Abhay Jaisen**
**421201 Mumbai (IN)**

(74) Representative: **Buzzi, Notaro & Antonielli d'Oulx S.p.A.**
**Corso Vittorio Emanuele II, 6**
**10123 Torino (IT)**

(56) References cited:
**US-A1- 2016 006 267      US-A1- 2020 303 959**

## Description

Technical field

The present invention relates generally to methods and devices for wireless charging.

Background

Wireless charging is becoming widely used recently to charge electronic devices including, but not limited to, mobile phones, smart watches, and tablets. A wireless power-receiving device (also referred to as a wireless power receiver) is electromagnetically coupled with a wireless power-transmitting device (also referred to as a wireless power transmitter). During the power transfer, communication between the wireless power-receiving device and the wireless power-transmitting device may be used to adjust the power received at the wireless power-receiving device. Communication may be achieved by varying an internal load of a receiving circuit of the wireless power-receiving device to produce an Amplitude Shift Keying (ASK) signal.

Various industry standards have been developed to specify the protocol between the wireless power transmitters and wireless power receiver, such as how the wireless power transmitters and wireless power receiver communicate with each other to adjust for supply and demand of power. For example, the Qi wireless charging standard defined by the Wireless Power Consortium (WPC) uses in-band communication within the transformer (e.g., transmitter coil and receiver coil) while the AirFuel protocol defined by the AirFuel Alliance uses out-of-band communication through Bluetooth, Near-Field Communication, and so on.

For devices with small rechargeable batteries, caution needs to be exercised for power transfer between the wireless power transmitter and the wireless power receiver, in order to achieve linear and finer power regulation to avoid stressing the battery charging system. There is a need in the art for wireless charging systems that is simple and cost effective, while providing linear and finer power regulation.

US 2016/006267 A1 discloses a wireless power transmitter with discrete supply voltage levels that are applied to the coil driving inverter. The levels are adjusted by feedback from the receiver.

Summary

According to one or more embodiments, the above objective is achieved by means of a method having the features specifically set forth in the claims that follow. Embodiments moreover concern a related wireless power transmitter.

The claims are an integral part of the technical teaching of the disclosure provided herein.

In some embodiments, a method for operating a wireless power transmitter includes: receiving a power control command from a wireless power receiver inductively coupled to the wireless power transmitter; computing a target transmitter power for the wireless power transmitter in accordance with the power control command; computing a potential voltage change for a transmitter voltage of the wireless power transmitter in accordance with the target transmitter power; determining if a magnitude of the potential voltage change is equal to or larger than a discrete step size of a supply voltage provided by a power supply, wherein the power supply is coupled to the wireless power transmitter and configured to provide the supply voltage to the wireless power transmitter; and in response to determining that the magnitude of the potential voltage change is equal to or larger than the discrete step size of the supply voltage, adjusting a transmitter power of the wireless power transmitter by: setting the supply voltage provided by the power supply to a first voltage value by changing the supply voltage by one or more discrete steps; computing a first target current value for a transmitter current of the wireless power transmitter in accordance with the target transmitter power and the first voltage value; and controlling a power conversion circuit of the wireless power transmitter using the first target current value, wherein the power conversion circuit is coupled to a coil of the wireless power transmitter, and is configured to provide an alternate current (AC) voltage to the coil of the wireless power transmitter.

In some embodiments, a method for operating a wireless power transmitter includes: receiving, by the wireless power transmitter, a power control command from a wireless power receiver, wherein the wireless power transmitter comprises a power conversion circuit, wherein the power conversion circuit is coupled to a Direct Current (DC) power supply and is configured to convert a DC voltage provided by the DC power supply into an Alternate Current (AC) voltage applied to a coil of the wireless power transmitter, wherein the DC voltage provided by the DC power supply changes in discrete steps and has a discrete step size; computing a target transmitter power for the wireless power transmitter in accordance with the power control command; computing, based on the target transmitter power and a present value of a transmitter current of the wireless power transmitter, a potential voltage change for a transmitter voltage of the wireless power transmitter in order to achieve the target transmitter power; determining if a magnitude of the potential voltage change is equal to or larger than the discrete step size of the DC power supply; and in response to determining that the magnitude of the potential voltage change is equal to or larger than the discrete step size of the DC power supply, adjusting a transmitter power of the wireless power transmitter by: shifting the DC voltage provided by the DC power supply by one or more discrete steps such that the DC voltage has a first voltage value; computing a first target current value for the transmitter current of the wireless power transmitter based on the target transmitter power and the first voltage value; and controlling the power conversion circuit using the first target current value.

In some embodiments, a wireless power transmitter includes: a coil; a power conversion circuit coupled to the coil, wherein the power conversion circuit is configured to receive a Direct Current (DC) voltage from a power supply and convert the DC voltage to an Alternate Current (AC) voltage applied to the coil, wherein DC voltage provided by the power supply is adjustable in discrete steps and has a discrete step size; a communication circuit coupled to the coil and configured to receive a power control command from a wireless power receiver; and a controller coupled to the power conversion circuit and the communication circuit, wherein the controller is configured to: receive the power control command from the communication circuit; compute a target transmitter power for the wireless power transmitter in accordance with the power control command; compute, based on the target transmitter power and a present value of a transmitter current of the wireless power transmitter, a potential voltage change for a transmitter voltage of the wireless power transmitter; compare the potential voltage change with the discrete step size of the power supply; and in response to determining that a magnitude of the potential voltage change is equal to or larger than the discrete step size of the power supply, adjust a transmitter power of the wireless power transmitter by: shifting the DC voltage provided by the power supply by one or more discrete steps such that the DC voltage has a first voltage value; computing a first target current value for the transmitter current of the wireless power transmitter based on the target transmitter power and the first voltage value; and controlling the power conversion circuit using the first target current value.

Brief description of the drawings

The details of one or more embodiments of the invention are set forth in the accompanying drawings and the description below. Other features, objects, and advantages of the invention will be apparent from the description and drawings, and from the claims. In the figures, identical reference symbols generally designate the same component parts throughout the various views, which will generally not be re-described in the interest of brevity. For a more complete understanding of the invention, reference is now made to the following descriptions taken in conjunction with the accompanying drawings, in which:

- Figure 1 illustrates a block diagram of wireless charging system, in an embodiment;
- Figure 2 illustrates a flow chart of a method for operating a wireless power transmitter, in an embodiment;
- Figure 3 illustrates a block diagram of a digital signal processing system, in an embodiment;
- Figures 4 and 5 illustrate performance of wireless charging systems without and with the presently disclosed method of operating the wireless power transmitter, respectively, in an embodiment; and
- Figure 6 illustrates a flow chart of a method for operating a wireless power transmitter, in an embodiment.

Detailed description

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

The present invention will be described in the context of wireless charging, and in particular embodiments, methods and circuits for wireless power transmitters.

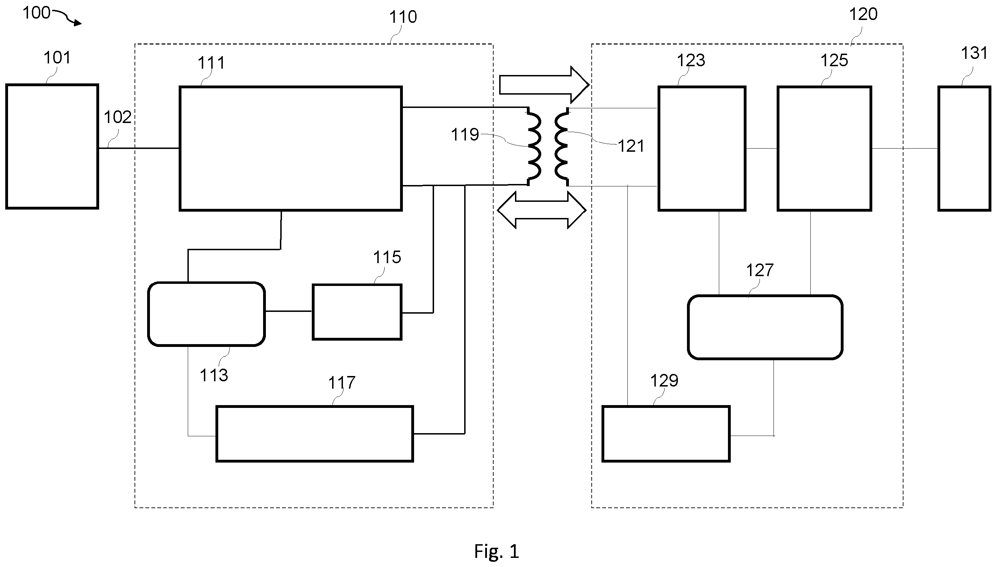

Figure 1 illustrates a block diagram of wireless charging system 100, in an embodiment. As shown in Figure 1, the wireless charging system 100 includes a wireless power transmitter 110 and a wireless power receiver 120. The wireless power transmitter 110 has a coil 119, which is inductively coupled to a coil 121 of the wireless power receiver 120.

In the example of Figure 1, the wireless power transmitter 110 is coupled to a power source 101 (also referred to as a power supply). In some embodiments, the power source 101 is a Direct Current (DC) power supply that provides a DC voltage to power the wireless power transmitter 110. The power source 101 may be, e.g., a Universal Serial Bus - Dedicated Charging Port (USB-DCP) power supply. Details of USB-DCP are described in the USB - Battery Charging (USB-BC) standard. In an example embodiment, the power source 101 is a USB - Quick Charge (USB-QC) power supply, where the USB-QC standard falls under the USB - BC standard. In some embodiments, the power source 101 (e.g., a USB-QC power supply) is plugged into a power outlet (e.g., a wall socket) and provides a DC voltage within a specific range (e.g., +5V to +12V). In some embodiments, the DC voltage provided by the power source 101 is adjustable in discrete steps having a discrete step size (e.g., 200 mV). The wireless power transmitter 110 may request a specific DC voltage from the power source 101 through a data line in a signal/data path 102 (e.g., for transmitting voltage signal(s) and digital data) between the power source 101 and the wireless power transmitter 110. For example, an USB-QC power supply may provide a DC voltage that is adjustable in discrete steps with a discrete step size of 200 mV.

In Figure 1, the wireless power transmitter 110 includes a power conversion circuit 111, a controller 113, a feedback circuit 115, an in-band communication circuit 117, and the coil 119. In some embodiments, the power conversion circuit 111 includes a Pulse Width Modulation (PWM) circuit and a power converter. The PWM circuit is configured to generate a PWM signal having a frequency and a duty cycle. The PWM signal drives the power converter of the power conversion circuit 111, which power converter may be, e.g., a DC-AC power converter that converts the DC voltage provided by the power source 101 into an Alternate Current (AC) voltage, where the AC voltage is applied to the coil 119 for wireless power transfer. In some embodiments, the output power (may also be referred to as the transmitter power) of the wireless power transmitter 110, which is equal to the multiplication of the voltage across the coil 119 (also referred to as transmitter voltage) and the current flowing through the coil 119 (also referred to as transmitter current), may be adjusted by adjusting the frequency or the duty cycle of the PWM signal driving the power converter of the power conversion circuit 111. In addition, the transmitter power may be adjusted by adjusting the DC voltage provided to the power conversion circuit 111 by the power source 101. Note that in the discussion herein, the word "or" is used in a non-exclusive context. For example, in the above discussion, the output power of the wireless power transmitter 110 is said to be adjustable by adjusting the frequency or the duty cycle of the PWM signal, which means that the output power of the wireless power transmitter 110 is adjustable by adjusting the frequency of the PWM signal, by adjusting the duty cycle of the PWM signal, or by adjusting both the frequency and the duty cycle of the PWM signal.

Although not illustrated in Figure 1, the wireless power transmitter 110 may include a rechargeable battery that is charged by the power conversion circuit 111. The rechargeable battery may replace the power source 101 as the DC power supply during wireless charging, when the power source 101 is not available. This may be useful in applications where a mobile device (e.g., a mobile phone) wirelessly charges another mobile device (e.g., another mobile phone, True Wireless earbuds, or the like).

The coil 119, which may also be referred to as the primary coil or transmitter coil, is inductively coupled (e.g., electromagnetically coupled) to the coil 121 (may also be referred to as a secondary coil or receiver coil) of the wireless power receiver 120. The AC current flowing through the transmitter coil 119 create a time-varying (e.g., an oscillating) electromagnetic field and induces a current in the wireless power receiver 120. The current induced in the wireless power receiver 120 may then be utilized for charging a load 131 (e.g., a rechargeable battery) coupled to the wireless power receiver 120.

In various embodiments, the feedback circuit 115 of the wireless power transmitter 110 is coupled to the coil 119 and is configured to measure the transmitter current and the transmitter voltage. The in-band communication circuit 117 is coupled to the coil 119 and is configured to perform in-band communication between the wireless power transmitter 110 and the wireless power receiver 120.

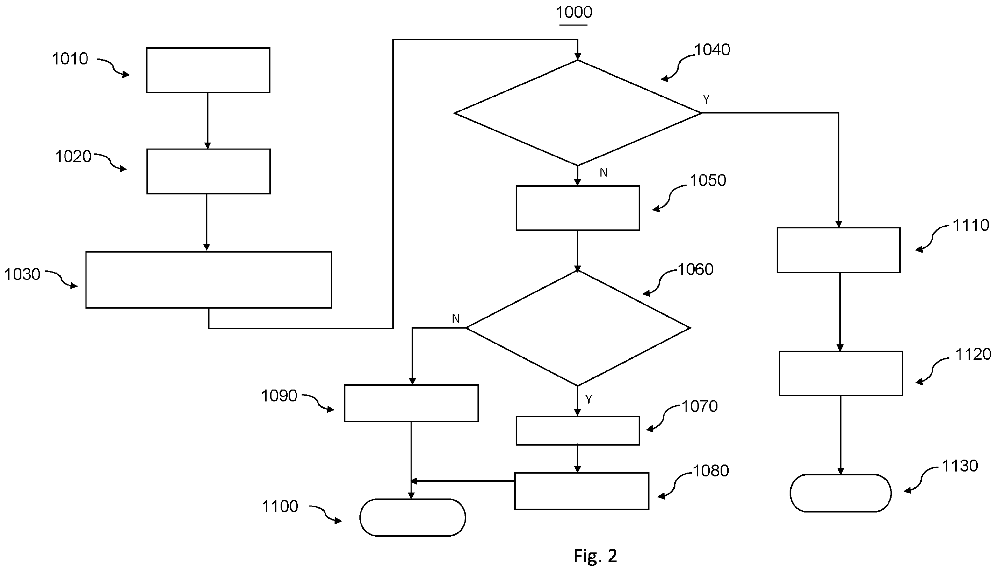

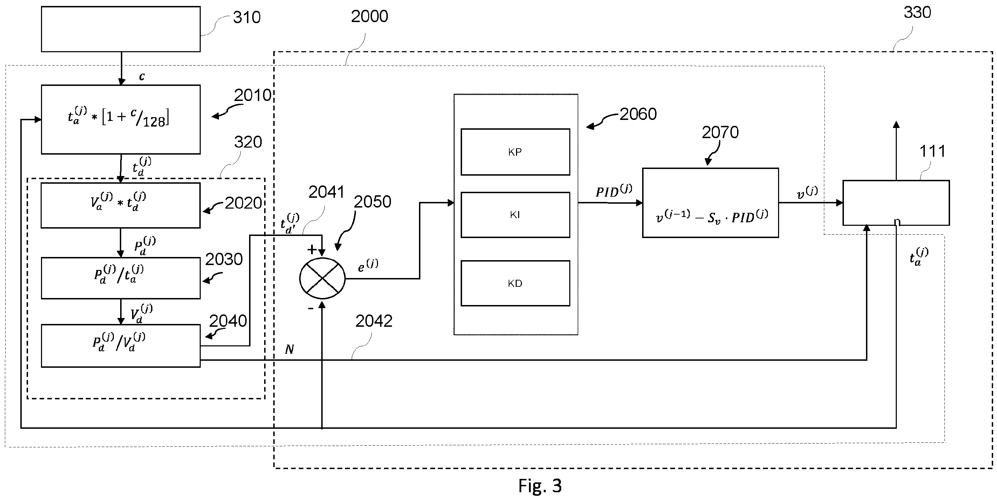

The controller 113 may be a micro-controller, a processor, an Application Specific Integrated-Circuit (ASIC), or the like, and is used to control operation of the wireless power transmitter 110. In some embodiments, the controller 113 includes a memory module (e.g., a non-volatile memory) that stores instructions (e.g., computer codes), which when executed by the controller 113, performs signal processing functions and generates control signals/data signals that are used to control the operation of the wireless power transmitter 110. For example, the controller 113 may perform the signal processing functions illustrated in Figure 3. The controller 113 may generate control signals/data signals that is used to control the wireless power transmitter 110 in accordance with the method 1000 of Figure 2. Details are discussed hereinafter.

Stilling referring to Figure 1, the wireless power receiver 120 includes the coil 121, a rectifier circuit 123, a voltage conditioning circuit 125, an in-band communication circuit 129, and a controller 127. In some embodiments, the rectifier circuit 123 rectifies (e.g., converts) the AC voltage induced across the coil 121 into a DC voltage. The rectifier circuit 123 may be any suitable rectifier, such as a full-bridge rectifier, a half-bridge rectifier, or the like. The DC voltage generated by the rectifier circuit 123 is conditioned by the voltage condition circuit 125 to provide a stable DC voltage for the load 131 (e.g., a rechargeable battery of a mobile device). The voltage condition circuit 125 may include a DC-DC power converter and a voltage regulator (e.g., a Low-Dropout (LDO) voltage regulator), as an example.

In some embodiments, the in-band communication circuit 129 of the wireless power receiver 120 communicates with the in-band communication circuit 117 of the wireless power transmitter 110 through Amplitude Shift Keying (ASK) modulation. In some embodiments, the in-band communication circuit 129 includes a capacitor and a switch that are coupled in parallel to an internal load. The switch, under the control of the controller 127, is switched between an "On" state and an "Off" state to connect or disconnect the capacitor from the internal load, which causes a change in the amplitude of the AC voltage across the coil 121. The change in the amplitude of the AC voltage across the coil 121 is sensed by the transmitter coil 119 (e.g., through electromagnetic coupling) and decoded by the in-band communication circuit 117.

The controller 127 of the wireless power receiver 120 may be a micro-controller, a processor, an Application Specific Integrated-Circuit (ASIC), or the like, and is used to control operation of the wireless power receiver 120. In some embodiments, the controller 127 includes a memory module (e.g., a non-volatile memory) that stores instructions (e.g.,

computer codes), which when executed by the controller 127, performs signal processing functions and generates control signals/data signals that are used to control the operation of the wireless power receiver 120. In some embodiments, the controller 127 monitors the output of the rectifier circuit 123 and/or the output of the voltage conditioning circuit 125, and based on, e.g., the DC voltage provided to the load 131, generates a power control command for the wireless power transmitter 110. The power control command is sent via the in-band communication circuits 129/117 using ASK modulation, in some embodiments.

In the illustrated embodiment, the power control command is a request for the wireless power transmitter 110 to increase or decrease the transmitted power by a percentage. For example, the power control command may indicate a control message of "power up by X percentage" or "power down by Y percentage." In some embodiments, due to, e.g., coupling loss between the wireless power transmitter 110 and the wireless power receiver 120, it may be difficult to send a request for a specific value (e.g., an absolute value) of the transmitter power in the power control command. The power change in percentage is a simple and flexible way to request a change in the transmitted power. Typically, a first power control command is followed by a few subsequent power control commands, in order for the transmitted power to be adjusted and approach the desired value.

Rechargeable-battery-operated wearable consumer electronic devices, such as smart-watch and True Wireless (TWS) earbuds, are now using wireless power delivery to charge the batteries of the devices. Typically, these wearable device batteries have capacity under 1000 mAh, and while charging, the charging power should be regulated precisely, since sudden or instantaneous surges in charging power may result in battery damage.

The wireless power transmitters used for recharging wearable device batteries may perform power regulation by changing operating frequency (of the PWM signal), duty-cycle (of the PWM signal), or supply voltage (e.g., provided to the power conversion circuit 111). Due to the small form factor of wearable devices, the receiver coils used on these devices have smaller areas. Due to the small area of the receiver coil, it may not be possible to achieve smooth power regulation by adjusting only the operating frequency and the duty-cycle of the wireless power transmitter, and it may be necessary to control the supply voltage as well.

To control supply voltage smoothly, DC-DC converters are generally used. However, DC-DC converters generally require bulky inductors, and considering the form factors of the wearable devices, those bulky inductors may not be used. Moreover, these bulky inductors will add extra component cost to the wireless power transmitter. Another unwanted side-effect of using DC-DC converters is that it may generate heat at the surface of the wireless power transmitter, which may be closely located to the battery of the wireless power transmitter and could potentially increase the battery temperature.

A potential solution to avoid using DC-DC converter in the wireless power converter but still be able to control supply voltage is to use a variable power supply such as a USB wall-adapter. Low-end USB wall-adapters, such as USB-DCP or USB-QC adaptors, are inexpensive and widely used for mobile device charging, but these USB wall-adapters usually have coarse voltage step size of, e.g., 200 mV compared to few mV for DC-DC converters. Adjusting supply voltage provided by these USB wall-adapters in coarse discrete step size (e.g., 200 mV) may create power spike at the wireless power receiver and may damage the battery of the wireless power receiver. High-end USB power adapters, such as USB - Power Delivery Programmable Power Supply (USB-PD PPS) power supplies, allows more precise voltage change in discrete step size of 20 mV and may be able to provide smooth control of supply voltage. However, the USB-PD PPS adapter has complex circuit design and incurs higher cost.

The present disclosure provides a solution that allows the use of the low-end USB wall-adapters (e.g., USB-QC adapters) with coarse voltage step size (e.g., 200 mV) as the power source 101 of Figure 1, and still achieve smooth power regulation. The wireless power transmitter 110 used in the disclosed solution has low complexity. The controller 113, by performing the signal processing functions of Figure 3 and by controlling the wireless power transmitter 110 (and the power source 101) in accordance with the method of Figure 2, achieves smooth power regulation. Details are discussed hereinafter.

Figure 2 illustrates a flow chart of a method 1000 for operating a wireless power transmitter, in an embodiment. The method 1000 may be used to control operation of the wireless power transmitter 110 of Figure 1. In particular, the method 1000 shows the operation performed by the wireless power transmitter 110 in response to a power control command. As discussed previously, during operation of the wireless charging system 100, the wireless power receiver 120 may send multiple power control commands, one after another, in order to fine-tune the transmitter power of the wireless power transmitter 110, such that smooth power regulation at the wireless power receiver 120 is achieved for charging the battery of the wireless power receiver 120. Discussion of the method 1000 refers to various devices/circuits in the wireless charging system 100 of Figure 1.

In Figure 2, at block 1010, a power control command is received by the wireless power transmitter 110 from the wireless power receiver 120. The power control command comprises a request of transmitter power adjustment, such as "power up by X percentage" or "power down by Y percentage," in some embodiments.

Next, at block 1020, the wireless power transmitter 110 computes a target power $P_{TARGET}$ (also referred to as a target transmitter power). The controller 113 computes the target transmitter power $P_{TARGET}$ by adjusting (e.g., increasing or decreasing) the present transmitter power by the required percentage. For example, the controller 113 has knowledge about the present value of the transmitter current (e.g., current flowing in the transmitter coil 119) and the present value of the transmitter voltage (e.g., voltage across the transmitter coil 119), which present values may be provided by the feedback circuit 115. In an embodiment, the controller 113 adjusts the present value of the transmitter current by the requested percentage to obtain a modified transmitter current value, then multiplies the modified transmitter current value with the present value of the transmitter voltage to compute the target transmitter power $P_{TARGET}$. Other ways to compute the target transmitter power are possible, and are fully intended to be included within the scope of the present disclosure. In the discussion herein, the "present value" of the transmitter voltage (or transmitter current) refers to the value of the transmitter voltage (or transmitter current) when the power control command is received and before the wireless power transmitter 110 adjusts the transmitter voltage (or transmitter current) in response to the power control command received currently.

Next, at block 1030, a potential voltage change $\Delta V$ to achieve the target transmitter power $P_{TARGET}$ is calculated. In some embodiments, the calculation of the potential voltage change $\Delta V$ is performed by dividing the target transmitter power $P_{TARGET}$ by the present value of the transmitter current to find a potential target voltage $V_{TARGET}$, then subtract the present value of the transmitter voltage from the potential target voltage $V_{TARGET}$. In other words, the potential voltage change $\Delta V$ represents a voltage change needed to achieve the target transmitter power $P_{TARGET}$, assuming that the transmitter current remains at the present value.

Next, at block 1040, the potential voltage change $\Delta V$ is compared with the discrete step size of the power source 101. In embodiments where an USB-QC power supply is used as the power source 101, the discrete step size is 200 mV. Denote the discrete step size of the power source 101 as $V_{STEP}$, the processing of the block 1040 compares the magnitude (e.g., the absolute value $|\Delta V|$) of the potential voltage change $\Delta V$ with the discrete step size $V_{STEP}$ of the power source 101, in order to determine if the magnitude of the potential voltage change $\Delta V$ is equal to or larger than the discrete step size $V_{STEP}$.

If the magnitude of the potential voltage change $\Delta V$ is equal to or larger than the discrete step size $V_{STEP}$, the processing of the method 1000 proceeds to block 1110, where a new voltage value $V_{IN}$ is computed for the output voltage of the power source 101 (which is the input voltage for the power conversion circuit 111 of the wireless power transmitter 110). In an example embodiment, the new voltage value $V_{IN}$ differs from the presently value of the output voltage of the power source 101 by $N$ discrete step sizes $V_{STEP}$, where $N$ is an integer. A positive integer number of $N$ indicates that the output voltage of the power source 101 should be increased by $N$ discrete steps, and a negative integer number of $N$ indicates that the output voltage of the power source 101 should be decreased by N discrete steps. Denote the present value (e.g., the value before changing by $N$ discrete steps) of the output voltage of the power source 101 as $V_{IN\_OLD}$, the new voltage value $V_{IN}$ is represented by:

$$V_{IN} = V_{IN\_OLD} + N \times V_{STEP} \tag{1}$$

In some embodiments, the integer number $N$ is determined by dividing the potential voltage change $\Delta V$ by the discrete step size $V_{STEP}$ to get a first number (which may be a floating point number or an integer), then rounding the first number into an integer that is equal to or immediately adjacent to (e.g., differs by a magnitude less than 1) to the first number. Different methods for performing the rounding of the first number may be used. As an example, the integer number $N$ may be determined by:

$$N = floor\left(\frac{\Delta V}{V_{STEP}}\right) \tag{2}$$

where the *floor*(.) function rounds its input to the nearest integer toward negative infinity. In other words, Equation (2) finds the integer number $N$ such that the new voltage value $V_{IN}$ is the closest to the potential target voltage $V_{TARGET}$ without going over (e.g., being larger than) the potential target voltage $V_{TARGET}$.

As another example, the integer number $N$ may be determined by:

$$N = ceil\left(\frac{\Delta V}{V_{STEP}}\right) \tag{3}$$

where the *ceil*(.) function rounds its input to the nearest integer toward positive infinity. In other words, Equation (3) finds the integer number N such that the new voltage value $V_{IN}$ is the closest to the potential target voltage $V_{TARGET}$ without going under (e.g., being smaller than) the potential target voltage $V_{TARGET}$.

As yet another example, the integer number $N$ may be determined by:

$$N = fix\left(\frac{\Delta V}{V_{STEP}}\right) \qquad\qquad (4)$$

where the *fix*(.) function rounds its input to the nearest integer toward zero. In some embodiments, a request to adjust the output voltage by $N$ discrete steps is sent through the signal/data path 102 to the power source 101, and the power source 101 adjusts its output voltage by $N$ discrete steps as requested. Note that in the illustrated embodiment, the new voltage value $V_{IN}$ is not applied instantly as it is computed, instead, the new voltage value $V_{IN}$ is applied later in a subsequent PID control loop (see, e.g., block 1130) to the power source 101 at the same time when a control signal $v^{(j)}$ (see Figure 3 and discussion thereof) is applied to the power conversion unit 111 to adjust the frequency or duty cycle of the PWM signal. Details are discussed hereinafter.

Next, in block 1120, a new target transmitter current $I_{TARGET}$ is calculated by dividing the target transmitter power $P_{TARGET}$ by the new voltage value $V_{IN}$:

$$I_{TARGET} = \frac{P_{TARGET}}{V_{IN}} \qquad\qquad (5)$$

Next, in block 1130, the new target transmitter current $I_{TARGET}$ is used as an input to drive the power conversion circuit 111 such that the transmitter current generated by the power conversion circuit 111 approaches the new target transmitter current $I_{TARGET}$. In the illustrated embodiment, the new target transmitter current $I_{TARGET}$ is used as an input to a Proportional-Integral-Differential (PID) control loop (see 330 in Figure 3) to generate a control signal $v^{(j)}$ (see $v^{(j)}$ in Figure 3), which control signal $v^{(j)}$ is sent to the power conversion circuit 111 and is used to control the frequency or the duty cycle of the PWM signal generated by the PWM signal generator of the power conversion circuit 111, in order to adjust the transmitter current of the wireless power transmitter 110 to approach the new target transmitter current $I_{TARGET}$. The transmitter voltage of the wireless power transmitter 110 may also be adjusted (e.g., fine-tuned within a small range) by the frequency or duty cycle of the PWM signal, as skilled artisans readily appreciate. In some embodiments, after the transmitter current is adjusted by the PID control loop, the wireless power receiver 120 evaluates the charging power for its battery, and may send one or more additional power control commands to the wireless power transmitter 110 to fine-tune the transmitter power. Usually, within a few adjustments (e.g., a few power control commands), the charging power is within the desired range for the wireless power receiver 120.

In some embodiments, the PID control loop used for adjusting the transmitter power is the PID control loop defined in the Qi wireless charging standard. This allows re-use of the parameters and control algorithms defined in the Qi wireless charging standard, which simplifies the product design, reduces product cost, and shortens product development time significantly. For example, the disclosed method 1000 may be implemented by modifying the firmware (e.g., computer codes) developed for the Qi wireless charging standard, and the wireless power transmitter 110 can use the same simple hardware developed for the Qi wireless charging standard.

For each power control command received, the processing in blocks 1110, 1120, and 1130 achieves the target transmitter power $V_{TARGET}$ by two adjustments: First, the DC voltage provided by the power source 101 is adjusted (e.g., in the PID control loop) by $N$ discrete steps, which causes a corresponding change in the transmitter voltage (e.g., a voltage shift of $N \times V_{STEP}$) generated by the power conversion circuit 111, which in turn causes a change in the transmitter power. This change in the transmitter voltage satisfies a first portion (which may be a majority portion) of the required transmitter power change. Second, the transmitter current is adjusted by the control signal generated by a PID control loop (details discussed below with reference to Figure 3), where the PID control loop uses the new target transmitter current $I_{TARGET}$ to compute an error signal that drives the PID control loop. The adjustment of the transmitter current satisfies the remaining portion (which may be a minor portion) of the required transmitter power change. In some embodiments, the PID control loop adjusts the transmitter power by adjusting the frequency or duty cycle of the PWM signal, and therefore, has limited capability in adjusting the transmitter power. The presently disclosed method, by adjusting the output voltage of the power source 101, allows large adjustment of the transmitter power, and the remaining small adjustment needed in the transmitter power is taken care of by the PID control loop. By combining the coarse adjustment capability of the power source 101 and the fine-tuning adjustment capability of the PID control loop, a large transmitter power adjustment range is achieved while achieving smooth, highly accurate transmitter power control.

Still referring to Figure 2, if the magnitude of the potential voltage change $\Delta V$ is smaller than the discrete step size $V_{STEP}$, the processing of the method 1000 proceeds to block 1050, where the potential voltage change $\Delta V$ (which may have a positive or negative value) is added to an accumulated voltage value $V_{ACCU}$. The accumulated voltage value $V_{ACCU}$ is initialized to zero during a power up or a reset of the wireless power transmitter 110, and is changed by the potential voltage change $\Delta V$ during the processing of the block 1050, in some embodiments.

Next, in block 1060, the magnitude (e.g., the absolute value $|\Delta V_{ACCU}|$) of the accumulated voltage value $V_{ACCU}$ is compared with the discrete step size $V_{STEP}$ of the power source 101, in order to determine if the magnitude of the accumulated voltage value $V_{ACCU}$ is equal to or larger than the discrete step size $V_{STEP}$.

If the magnitude of the accumulated voltage value $V_{ACCU}$ is equal to or larger than the discrete step size $V_{STEP}$, the processing proceeds to block 1070, where a new voltage value $V_{IN}$ for the power source 101 is computed by adjusting the present value for the output voltage of the power source 101 by one discrete step size. In particular, if the accumulated voltage value $V_{ACCU}$ has a positive value (e.g., $V_{ACCU} \geq V_{STEP}$), then the new voltage value $V_{IN}$ of the power source 101 is increased by one discrete step size of $V_{STEP}$, and the accumulated voltage value $V_{ACCU}$ is assigned an updated value of $V_{ACCU} - V_{STEP}$. Conversely, if the accumulated voltage value $V_{ACCU}$ has a negative value (e.g., $V_{ACCU} \leq -V_{STEP}$), then the new voltage value $V_{IN}$ is decreased by one discrete step size of $V_{STEP}$, and the accumulated voltage value $V_{ACCU}$ is assigned an updated value of $V_{ACCU} + V_{STEP}$. Note that the new voltage value $V_{IN}$ is applied to the power source 101 later, in the PID control loop (see block 1100).

Next, in block 1080, a new target transmitter current $I_{TARGET}$ is calculated by dividing the target transmitter power $P_{TARGET}$ by the new voltage value $V_{IN}$ computed in block 1070, using Equation (5).

Next, in block 1100, the new target transmitter current $I_{TARGET}$ is used to calculate the error signal that drives the PID control loop. In response to the error signal, the PID control loop generates a control signal $v^{(j)}$ (see Figure 3), which control signal controls the power conversion circuit 111 such that the transmitter current generated by the power conversion circuit 111 approaches the new target transmitter current $I_{TARGET}$. The processing is the same as or similar to that of block 1130, thus details are not repeated.

The processing in blocks 1060, 1070, and 1080 provides additional performance advantage. To appreciate the advantage, consider a scenario where multiple power control command are received, where each power control command corresponds to a respective small potential voltage change $\Delta V$ (e.g., smaller than one discrete step size $V_{STEP}$), and all of the power control commands request power adjustment in the same direction (e.g. power up or power down). Without the processing of blocks 1060, 1070, and 1080, the wireless power transmitter 110 may adjust only the frequency or duty cycle of the PWM signal in the power conversion circuit 111 to accommodate the requested transmit power change. However, adjusting only the frequency or duty cycle of the PWM signal can only achieve limited range of adjustment in the transmit power. If the sequence of power control commands all request "power up" or "power down," then after responding to the first few power control commands, the power conversion circuit 111 may reach its maximum adjustment range (e.g., reaching the maximum frequency or duty cycle), and may not be able to accommodate additional power adjustment requests. The present disclosure, by combining multiple small power adjustment requests into one discrete step size change in the output voltage $V_{IN}$ of the power source 101, ensures that the power conversion circuit 111 only have to accommodate small power adjustment requests within its adjusting capability, thereby ensuring smooth, well-regulated power adjustment.

If, in the processing of block 1060, the magnitude of the accumulated voltage value $V_{ACCU}$ is determined to be smaller than the discrete step size $V_{STEP}$, the output voltage $V_{IN}$ of the power source 101 is not changed (e.g., maintain the present value). The processing proceeds to block 1090, where a new target transmitter current $I_{TARGET}$ is calculated by dividing the target transmitter power $P_{TARGET}$ by the present value of the output voltage $V_{IN}$, using Equation (5).

Next, the processing proceeds to block 1100, where the new target transmitter current $I_{TARGET}$ is used for control of the PID control loop. The processing of block 1100 has been discussed above, thus details are not repeated.

Figure 3 illustrates a block diagram of a digital signal processing system 2000, in an embodiment. The functional blocks of the digital signal processing system 2000 are used to implement the various processing steps of the method 1000 of Figure 2. In some embodiments, the digital signal processing system 2000 is implemented as the firmware running on the controller 113 of the wireless power transmitter 110.

As illustrated in Figure 3, the digital signal processing system 2000 accepts a power control command c and generates a control signal $v^{(j)}$ as its output, where the superscript $(j)$ indicates the iteration number within the PID control loop 330, details of which are discussed hereinafter. For example, the power control command $c$ represents the power control command received currently, and the control signal $v^{(j)}$ is the $j$-th control signal calculated by the PID control loop 330 in response to the power control command received currently, where $j = 1, 2, ..., M$, and $M$ is the total number of iterations of the PID control loop 330 in response to the power control command received currently. The control signal $v^{(j)}$ contains control information, such as frequency or duty cycle of the PWM signal, and is sent to the power conversion circuit 111 to control the operation of the power conversion circuit 111.

In Figure 3, the block 310 may correspond to a power control command $c$ relayed by the in-band communication circuit 117 to the controller 113. In the example of Figure 3, the functional block 2010 receives the power control command $c$, which indicates a percentage change in the transmitter power, and scales the present value $t_a^{(j)}$ of the transmitter current by the requested percentage change to compute a target transmitter current value $t_d^{(j)}$. For example, in various embodiments, the functional block 2010 computes the target transmitter current value $t_d^{(j)}$ according to the following equation:

$$t_d^{(j)} = t_a^{(j)} \cdot \left[ 1 + {}^c/_{128} \right]$$

For example, in the embodiments considered, the value c uses a signed binary coding having 8 bits, and the term $c/128$ is used to calculate the percentage change in the transmitter power.

Next, in functional block 2020, the present value $V_a^{(j)}$ of the transmitter voltage is multiplied with the target transmitter current value $t_d^{(j)}$ to compute a target transmitter power $P_d^{(j)}$. Accordingly, in the embodiment considered, the functional block 2020 computes:

$$P_d^{(j)} = V_a^{(j)} \cdot t_d^{(j)}$$

Next, in functional block 2030, a potential target voltage $V_d^{(j)}$ is computed by dividing the target transmitter power $P_d^{(j)}$ by the transmitter current value $t_a^{(j)}$. Specifically, in the embodiment considered, the functional block 2030 computes:

$$V_d^{(j)} = P_d^{(j)}/t_a^{(j)}$$

Next, the functional block 2040 performs the processing in various processing steps of Figure 2, such as the processing steps after the block 1030 but excluding the processing of "Run PID Loop" in blocks 1130 and 1100. For example, the functional block 2040 may perform the comparison step (e.g., blocks 1040/1060), the processing step of "Compute New $V_{IN}$" in Figure 2 (e.g., blocks 1110/1070), and send a signal 2042, which indicates the integer number N of discrete voltage steps for the power source 101 to adjust its output voltage, to the power conversion circuit 111 (which then relays the integer number N to the power source 101). In addition, the functional block 2040 may perform the processing of "Compute New Target Current" of Figure 2 (e.g., blocks 1090/1080/1120), and send a signal 2041, which indicates a new target current value $t_{d'}^{(j)}$, to an adder 2050. The new target current value $t_{d'}^{(j)}$ corresponds to the new target transmitter current $I_{TARGET}$ discussed above, in some embodiments. The new target current value $t_{d'}^{(j)}$ is used as an input to the PID control loop 330. Note that in the illustrated embodiment, the processing in functional blocks 2010, 2020, 2030, and 2040 are performed only once (when $j = 1$) for the power control command received currently, and therefore, the new target current value $t_{d'}^{(j)}$ is computed only once when $j = 1$ and is used as the target value for the PID control loop 330. The PID control loop 330, however, may run multiple iterations (e.g., a total of M iterations) within a given period of time to generate the control signal $v^{(j)}$ in each of the iterations, and the control signal $v^{(j)}$ is used to adjust the frequency or duty cycle of the PWM signal of the power conversion unit 111 in each of the iterations. For example, in the j-th iteration, the present value $t_a^{(j)}$ of the transmitter current is subtracted from $t_{d'}^{(j=1)}$ to generate an error signal $e^{(j)}$, which in turn generates a control signal $v^{(j)}$ for the j-th iteration, as discussed below. Note that the notation $t_{d'}^{(j=1)}$ is used here to clearly indicate that the new target current value $t_{d'}^{(j)}$ is calculated only once when $j = 1$ and is used for all of the M iterations of the PID control loop 330.

As illustrated in the Figure 3, within the PID control loop 330, the adder 2050 computes an error signal $e^{(j)}$ between the new target current value $t_{d'}^{(j=1)}$ and the present value $t_a^{(j)}$ of the transmitter current. Next, the error signal $e^{(j)}$ is used as an input signal to drive a PID controller functional block 2060 and to generate an output signal $PID^{(j)}$. The PID controller functional block 2060 may include a proportional control block, an integral control block, and a derivative control block to perform the PID control function, as an example. In some embodiments, the PID controller functional block 2060 uses the parameters and structure described in the Qi wireless charging standard. PID control is known in the art, thus details are not discussed here. For this reason, the functional block 2060 just shows schematically the proportional component KP, the integral component KI and the derivative component KD of a conventional PID controller.

Next, in the functional block 2070, the output signal $PID^{(j)}$ is scaled by a scaling factor $S_v$, then the scaled value is subtracted from a previous value $v^{(j-1)}$ (e.g., value in a previous iteration of the PID control loop) of the control signal to generate the control signal $v^{(j)}$ as the output signal of the digital signal processing system 2000 (also referred to as the output of the PID control loop) in response to the power control command received. Accordingly, in the embodiment considered, the functional block 2070 computes:

$$v^{(j)} = v^{(j-1)} - S_v \cdot PID^{(j)}$$

As discussed above, in some embodiments, the PID control loop 330 runs multiple iterations. During the $j$-th iteration, $j = 1, 2., ... , M$, a corresponding control signal $v^{(j)}$ is generated to control the frequency or duty cycle of the PWM signal of the power conversion unit 111. Notably, the new voltage value $V_{IN}$ for the power source 101 is applied at the same time when the control signal $v^{(j)}$ is applied to the power conversion unit 111, as discussed above. In other words, the output voltage of the power source 101 is changed (if voltage change is needed as determined by the processing of Figure 2) at the same time when the frequency or duty cycle of the PWM signal of the power conversion unit 111 are changed. In some embodiments, the signal 2042, which indicates the integer number $N$ of discrete voltage steps for the power source 101 to adjust its output voltage, may be included within the control signal $v^{(j)}$ as part of the control signal $v^{(j)}$.

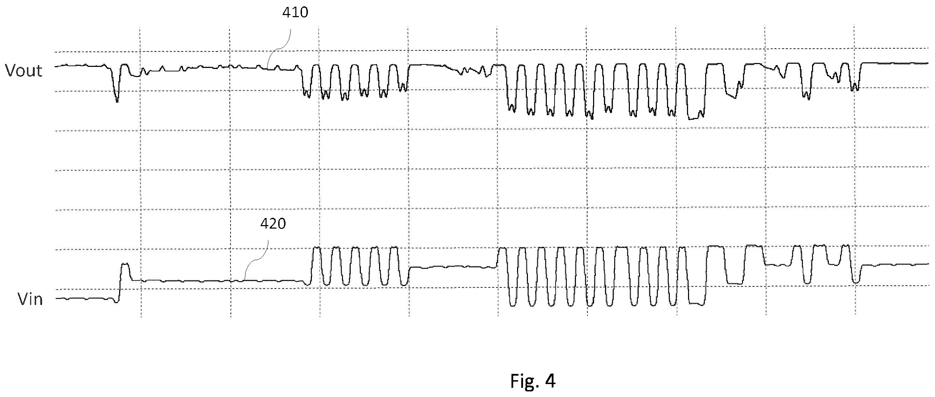

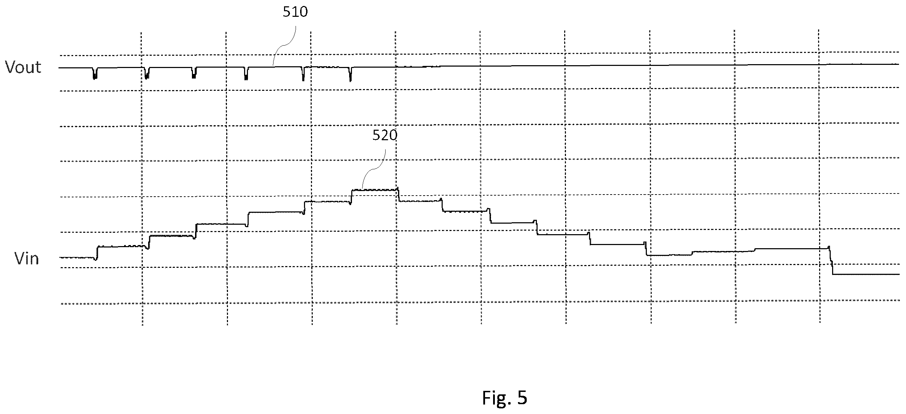

Figures 4 and 5 illustrate performance of a wireless charging system without and with the presently disclosed control method for the wireless power transmitter, respectively, in an embodiment. To generate the performance results of Figure 4, a reference signal processing system is formed by modifying the digital signal processing system 2000 of Figure 3 by removing the functional blocks in the dashed region 320 and by supplying the output signal $t_d^{(j)}$ of the function block 2010 to the adder 2050 to replace the signal $t_{d'}^{(j)}$. The power source 101 used to obtain the performance results in Figures 4 and 5 is a USB-QC power supply with a discrete step size of 200 mV.

In Figure 4, the curve 420 shows the voltage $V_{IN}$ provided by the power source 101, and the curve 410 shows the output voltage $V_{OUT}$ (e.g., voltage at the output of the voltage condition circuit 125) of the wireless power receiver 120. In the reference signal processing system, the output signal $v^{(j)}$ of the PID control loop controls the voltage $V_{IN}$ provided by the power source 101 and the frequency or duty cycle of the PWM signal of the power conversion circuit 111. A medium load condition of about 500 mA is simulated. As shown in the Figure 4, without the disclosed control method, the coarse step size of 200 mV of the power source 101 is too large to achieve a smooth received voltage at a target level. In fact, as illustrated in Figure 4, due to the coarse step size of 200 mV, oscillation in the output voltage $V_{OUT}$ occurs as the wireless power receiver 120 sends power control commands that oscillate (e.g., alternate) between a "power up" request and a "power down" request. The large voltage spikes in the output voltage $V_{OUT}$ due to the oscillation may be too large and may damage the rechargeable battery being charged by the output voltage $V_{OUT}$.

In Figure 5, the curve 520 shows the voltage $V_{IN}$ provided by the power source 101, and the curve 510 shows the output voltage $V_{OUT}$ (e.g., voltage at the output of the voltage condition circuit 125) of the wireless power receiver 120. To generate the performance results of Figure 5, the load is varied from 0 A to 1 A, and the method 1000 (implemented by the digital signal processing system 2000) is used to control the wireless power transmitter 110. As shown in Figure 5, as the load sweeps from 0 A to 1 A, the voltage $V_{IN}$ provided by the power source 101 changes from 5 V to 8 V in discrete step size of 200 mV, and a smooth output voltage $V_{OUT}$ is observed throughout the process, with a maximum voltage dip of less than 140 mV.

Disclosed embodiments may achieve advantages. For example, the disclosed method 1000 adjusts the transmitter power by adjusting the output voltage of the power source 101 by one or more discrete steps when possible, and by adjusting the frequency or duty cycle of the PWM signal in the power conversion circuit 111. The disclosed method requires no hardware change in the wireless power transmitter, and allows the use of inexpensive, widely available power supply (e.g., USB-QC power supply) as the power source 101. The disclosed control method may be implemented as firmware running on the controller 113, and the firmware may re-use software modules previous designed for the PID control of the Qi wireless charging standard. The above features/advantages reduce cost of the wireless power transmitter and shorten product development time.

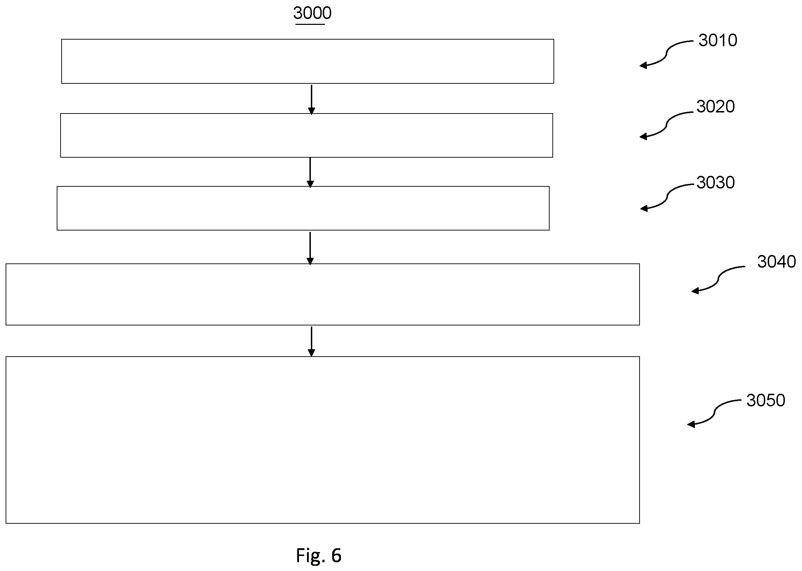

Figure 6 illustrates a flow chart of a method 3000 for operating a wireless power transmitter, in an embodiment. It should be understood that the method 3000 shown in Figure 6 is merely an example of many possible embodiment methods. One of ordinary skill in the art would recognize many variations, alternatives, and modifications. For example, various steps as illustrated in Figure 6 may be added, removed, replaced, rearranged, or repeated.

Referring to Figure 6, at block 3010, a power control command is received from a wireless power receiver inductively coupled to the wireless power transmitter. At block 3020, a target transmitter power for the wireless power transmitter is computed in accordance with the power control command. At block 3030, a potential voltage change for a transmitter voltage of the wireless power transmitter is computed in accordance with the target transmitter power. At block 3040, whether the potential voltage change is equal to or larger than a discrete step size of a supply voltage provided by a power supply is determined, wherein the power supply is coupled to the wireless power transmitter and configured to provide the supply voltage to the wireless power transmitter. At block 3050, in response to determining that the potential voltage change is equal to or larger than the discrete step size of the supply voltage, a transmitter power of the wireless power transmitter is adjusted by: setting the supply voltage provided by the power supply to a first voltage value by changing the supply voltage by one or more discrete steps; computing a first target current value for a transmitter current of the wireless power transmitter in accordance with the target transmitter power and the first voltage value; and controlling a power conversion circuit of the wireless power transmitter using the first target current value, wherein the power conversion circuit is coupled to a coil of the wireless power transmitter, and is configured to provide an alternate current (AC) voltage to the coil of the wireless power transmitter.

**Claims**

1. A method for operating a wireless power transmitter, the method comprising:

   - receiving (1010) a power control command from a wireless power receiver (120) inductively coupled to the wireless power transmitter (110);
   - computing (1020) a target transmitter power for the wireless power transmitter in accordance with the power control command;
   - computing (1030) a potential voltage change for a transmitter voltage of the wireless power transmitter in accordance with the target transmitter power;
   - determining (1040) if a magnitude of the potential voltage change is equal to or larger than a discrete step size of a supply voltage provided by a power supply (101), wherein the power supply is coupled to the wireless power transmitter and configured to provide the supply voltage to the wireless power transmitter; and
   - in response to determining that the magnitude of the potential voltage change is equal to or larger than the discrete step size of the supply voltage, adjusting a transmitter power of the wireless power transmitter by:

     - setting (1110) the supply voltage provided by the power supply to a first voltage value by changing the supply voltage by one or more discrete steps;
     - computing (1020) a first target current value for a transmitter current of the wireless power transmitter in accordance with the target transmitter power and the first voltage value; and
     - controlling (1130) a power conversion circuit (111) of the wireless power transmitter using the first target current value, wherein the power conversion circuit is coupled to a coil (119) of the wireless power transmitter, and is configured to provide an alternate current, AC, voltage to the coil of the wireless power transmitter.

2. The method of claim 1, wherein the power supply is a direct current, DC, power supply configured to provide a DC voltage, and the power conversion circuit is configured to convert the DC voltage provided by the power supply into the AC voltage applied to the coil of the wireless power transmitter.

3. The method of claim 2, wherein the DC voltage provided by the DC power supply changes in discrete steps and has a discrete step size.

4. The method of claim 2 or claim 3, wherein the power supply is a Universal Serial Bus - Dedicated Charging Port power supply.

5. The method of claim 4, wherein controlling the power conversion circuit comprises:

   - computing (2050) an error signal by calculating a difference between the first target current value and a present value of the transmitter current;
   - generating a control signal by processing the error signal using a Proportional-Integral-Differential, PID, control block (2060); and
   - controlling the power conversion circuit (111) of the wireless power transmitter using the control signal.

6. The method of any of the previous claims, wherein computing the potential voltage change comprises:

   - obtaining present values for the transmitter current and the transmitter voltage of the wireless power transmitter;

- dividing (2030) the target transmitter power by the present value of the transmitter current to obtain a potential target voltage for the wireless power transmitter; and
- calculating (2040) a voltage difference between the potential target voltage and the present value of the transmitter voltage.

7. The method of claim 6, wherein setting the supply voltage comprises:

- dividing the voltage difference by the discrete step size of the supply voltage to obtain a first number;
- rounding the first number to an integer number that is equal to or immediately adjacent to the first number; and
- shifting the supply voltage by the integer number of discrete steps to set the supply voltage to the first voltage value.

8. The method of any of the previous claims, further comprising, in response to determining that the magnitude of the potential voltage change is smaller than the discrete step size of the supply voltage, adjusting the transmitter power of the wireless power transmitter by:

- accumulating (1050) the potential voltage change by adding the potential voltage change to an accumulated value; and
- comparing (1050) the accumulated value with the discrete step size of the supply voltage.

9. The method of claim 8, further comprising, in response to determining that a magnitude of the accumulated value is smaller than the discrete step size of the supply voltage:

- keeping the supply voltage provided by the power supply unchanged at a present value of the supply voltage;
- computing (1090) a second target current value for the transmitter current of the wireless power transmitter in accordance with the target transmitter power and the present value of the supply voltage; and
- controlling (1100) the power conversion circuit of the wireless power transmitter using the second target current value.

10. The method of claim 8 or claim 9, further comprising, in response to determining that a magnitude of the accumulated value is equal to or larger than the discrete step size of the supply voltage:

- setting (1070) the supply voltage provided by the power supply to a second voltage value by shifting the supply voltage by the discrete step size;
- computing (1080) a third target current value for the transmitter current of the wireless power transmitter in accordance with the target transmitter power and the second voltage value; and
- controlling (1100) the power conversion circuit of the wireless power transmitter using the third target current value.

11. The method of any of the previous claims, wherein setting the supply voltage and controlling the power conversion circuit are performed at the same time.

12. The method of any of the previous claims, wherein the power conversion circuit comprises a Pulse Width Modulation, PWM, signal generator and a DC-AC converter driven by a PWM signal generated by the PWM signal generator, wherein controlling the power conversion circuit comprises controlling a frequency or a duty cycle of the PWM signal.

13. The method of any of the previous claims, wherein the power control command comprises a request from the wireless power receiver, wherein the request indicates a percentage change required in the transmitter power of the wireless power transmitter.

14. The method of claim 13, wherein computing the target transmitter power comprises:

- computing (2010) a modified current value by changing the present value of the transmitter current by the percentage change indicated in the power control command; and
- multiplying (2020) the modified current value with a present value of the transmitter voltage of the wireless power transmitter.

15. A wireless power transmitter comprising:

- a coil (119);
- a power conversion circuit (111) coupled to the coil, wherein the power conversion circuit is configured to receive a Direct Current, DC, voltage from a power supply (101) and convert the DC voltage to an Alternate Current, AC, voltage applied to the coil, wherein DC voltage provided by the power supply is adjustable in discrete steps and has a discrete step size;
- a communication circuit (117) coupled to the coil and configured to receive a power control command from a wireless power receiver (120); and
- a controller (113) coupled to the power conversion circuit and the communication circuit, wherein the controller is configured to implement the method according to any of the previous claims.

16. The wireless power transmitter of claim 15, further comprising a feedback circuit (115) couple to the coil and configured to measure present values of the transmitter current and the transmitter voltage.

17. The wireless power transmitter of claim 15 or claim 16, wherein the power conversion circuit comprises a Pulse Width Modulation, PWM, signal generator and a DC-AC converter driven by a PWM signal generated by the PWM signal generator, wherein controlling the power conversion circuit comprises controlling a frequency or a duty cycle of the PWM signal.

**Patentansprüche**

1. Verfahren zum Betreiben eines drahtlosen Leistungssenders, das Verfahren umfassend:

- Empfangen (1010) eines Leistungssteuerungsbefehls von einem drahtlosen Leistungsempfänger (120), der induktiv mit dem drahtlosen Leistungssender (110) gekoppelt ist;
- Berechnen (1020) einer Zielsendeleistung für den drahtlosen Leistungssender in Übereinstimmung mit dem Leistungssteuerungsbefehl;
- Berechnen (1030) einer potenziellen Spannungsänderung für eine Sendespannung des drahtlosen Leistungssenders in Übereinstimmung der Zielsendeleistung;
- Bestimmen (1040), ob eine Größe der potenziellen Spannungsänderung gleich oder größer als eine diskrete Schrittgröße einer Versorgungsspannung ist, die von einer Leistungsversorgung (101) bereitgestellt wird, wobei die Leistungsversorgung mit dem drahtlosen Leistungssender gekoppelt und so konfiguriert ist, dass sie dem drahtlosen Leistungssender die Versorgungsspannung bereitstellt; und
- in Reaktion auf das Bestimmen, dass die Größe der potenziellen Spannungsänderung gleich oder größer als die diskrete Schrittgröße der Versorgungsspannung ist, Anpassen einer Sendeleistung des drahtlosen Leistungssenders durch:

- Einstellen (1110) der Versorgungsspannung, die von der Leistungsversorgung bereitgestellt wird, auf einen ersten Spannungswert durch Ändern der Versorgungsspannung um einen oder mehrere diskrete Schritte;
- Berechnen (1020) eines ersten Zielstromwerts für einen Sendestrom des drahtlosen Leistungssenders in Übereinstimmung mit der Zielsendeleistung und dem ersten Spannungswert; und
- Steuern (1130) einer Leistungswandlerschaltung (111) des drahtlosen Leistungssenders unter Verwendung des ersten Zielstromwerts, wobei die Leistungswandlerschaltung mit einer Spule (119) des drahtlosen Leistungssenders gekoppelt und so konfiguriert ist, dass sie der Spule des drahtlosen Leistungssenders eine Wechselstrom-, AC-, Spannung bereitstellt.

2. Verfahren nach Anspruch 1, wobei die Leistungsversorgung eine Gleichstrom-, DC-, Leistungsversorgung ist, die so konfiguriert ist, dass sie eine Gleichspannung bereitstellt, und die Leistungswandlerschaltung so konfiguriert ist, dass sie die von der Leistungsversorgung bereitgestellte Gleichspannung in die Wechselspannung umwandelt, die an die Spule des drahtlosen Leistungssenders angelegt wird.

3. Verfahren nach Anspruch 2, wobei sich die Gleichspannung, die von der Gleichstromversorgung bereitgestellt wird, in diskreten Schritten ändert und eine diskrete Schrittgröße aufweist.

4. Verfahren nach Anspruch 2 oder Anspruch 3, wobei die Leistungsversorgung eine Leistungsversorgung mit universellem seriellem Bus - dediziertem Ladeanschluss ist.

5. Verfahren nach Anspruch 4, wobei das Steuern der Leistungswandlerschaltung Folgendes umfasst:

- Errechnen (2050) eines Fehlersignals durch Berechnen einer Differenz zwischen dem ersten Zielstromwert und einem aktuellen Wert des Sendestroms;
- Erzeugen eines Steuersignals durch Verarbeiten des Fehlersignals unter Verwendung eines Proportional-Integral-Differential-, PID-, Steuerblocks (2060); und
- Steuern der Leistungswandlerschaltung (111) des drahtlosen Leistungssenders unter Verwendung des Steuersignals.

6. Verfahren nach einem der vorstehenden Ansprüche, wobei das Berechnen der potenziellen Spannungsänderung umfasst:

- Erhalten von aktuellen Werten für den Sendestrom und die Sendespannung des drahtlosen Leistungssenders;
- Teilen (2030) der Zielsendeleistung durch den aktuellen Wert des Sendestroms, um eine potenzielle Zielspannung für den drahtlosen Leistungssender zu erhalten; und
- Errechnen (2040) einer Spannungsdifferenz zwischen der potenziellen Zielspannung und dem aktuellen Wert der Sendespannung.

7. Verfahren nach Anspruch 6, wobei das Einstellen der Versorgungsspannung umfasst:

- Dividieren der Spannungsdifferenz durch die diskrete Schrittgröße der Versorgungsspannung, um eine erste Zahl zu erhalten;
- Runden der ersten Zahl auf eine Ganzzahl, die gleich oder ein unmittelbarer Nachbar der ersten Zahl ist; und
- Verschieben der Versorgungsspannung um die ganzzahlige Anzahl diskreter Schritte, um die Versorgungsspannung auf den ersten Spannungswert einzustellen.

8. Verfahren nach einem der vorstehenden Ansprüche, in Reaktion auf das Bestimmen, dass die Größe der potenziellen Spannungsänderung kleiner ist als die diskrete Schrittgröße der Versorgungsspannung, ferner umfassend das Anpassen der Sendeleistung des drahtlosen Leistungssenders durch:

- Akkumulieren (1050) der potenziellen Spannungsänderung durch Addieren der potenziellen Spannungsänderung zu einem akkumulierten Wert; und
- Vergleichen (1050) des akkumulierten Werts mit der diskreten Schrittgröße der Versorgungsspannung.

9. Verfahren nach Anspruch 8, in Reaktion auf das Bestimmen, dass eine Größe des akkumulierten Werts kleiner ist als die diskrete Schrittgröße der Versorgungsspannung, ferner umfassend:

- Unveränderthalten der Versorgungsspannung, die von der Leistungsversorgung bereitgestellt wird, auf einem aktuellen Wert der Versorgungsspannung;
- Berechnen (1090) eines zweiten Zielstromwerts für den Sendestrom des drahtlosen Leistungssenders in Übereinstimmung mit der Zielsendeleistung und dem aktuellen Wert der Versorgungsspannung; und
- Steuern (1100) der Leistungswandlerschaltung des drahtlosen Leistungssenders unter Verwendung des zweiten Zielstromwerts.

10. Verfahren nach Anspruch 8 oder Anspruch 9, in Reaktion auf das Bestimmen, dass eine Größe des akkumulierten Werts gleich oder größer als die diskrete Schrittgröße der Versorgungsspannung ist, ferner umfassend:

- Einstellen (1070) der Versorgungsspannung, die von der Leistungsversorgung bereitgestellt wird, auf einen zweiten Spannungswert durch Verschieben der Versorgungsspannung um die diskrete Schrittgröße;
- Berechnen (1080) eines dritten Zielstromwerts für den Sendestrom des drahtlosen Leistungssenders in Übereinstimmung mit der Zielsendeleistung und dem zweiten Spannungswert; und
- Steuern (1100) der Leistungswandlerschaltung des drahtlosen Leistungssenders unter Verwendung des dritten Zielstromwerts.

11. Verfahren nach einem der vorstehenden Ansprüche, wobei das Einstellen der Versorgungsspannung und das Steuern der Leistungswandlerschaltung gleichzeitig durchgeführt werden.

12. Verfahren nach einem der vorstehenden Ansprüche, wobei die Leistungswandlerschaltung einen Pulsweitenmodulations-, PWM-, Signalgenerator und einen DC-AC-Wandler umfasst, der über ein vom PWM-Signalgenerator erzeugtes PWM-Signal angesteuert wird, wobei das Steuern der Leistungswandlerschaltung das Steuern einer Frequenz oder eines Tastgrades des PWM-Signals umfasst.

13. Verfahren nach einem der vorstehenden Ansprüche, wobei der Leistungssteuerungsbefehl eine Anforderung vom drahtlosen Leistungsempfänger umfasst, wobei die Anforderung eine prozentuale Änderung angibt, die in der Sendeleistung des drahtlosen Leistungssenders erforderlich ist.

14. Verfahren nach Anspruch 13, wobei das Berechnen der Zielsendeleistung umfasst:

- Berechnen (2010) eines modifizierten Stromwerts durch Ändern des aktuellen Werts des Sendestroms um die in dem Leistungssteuerungsbefehl angegebene prozentuale Änderung; und
- Multiplizieren (2020) des modifizierten Stromwerts mit einem aktuellen Wert der Sendespannung des drahtlosen Leistungssenders.

15. Drahtloser Leistungssender, umfassend:

- eine Spule (119);
- eine Leistungswandlerschaltung (111), die mit der Spule gekoppelt ist, wobei die Leistungswandlerschaltung so konfiguriert ist, dass sie eine Gleichstrom-, DC-, Spannung von einer Leistungsversorgung (101) empfängt und die Gleichspannung in eine Wechselstrom-, AC-, Spannung umwandelt, die an die Spule angelegt wird, wobei die von der Leistungsversorgung bereitgestellte Gleichspannung in diskreten Schritten angepasst werden kann und eine diskrete Schrittgröße aufweist;
- eine Kommunikationsschaltung (117), die mit der Spule gekoppelt und so konfiguriert ist, dass sie einen Leistungssteuerungsbefehl von einem drahtlosen Leistungsempfänger (120) empfängt; und
- eine Steuereinheit (113), die mit der Leistungswandlerschaltung und der Kommunikationsschaltung gekoppelt ist, wobei die Steuereinheit so konfiguriert ist, dass sie das Verfahren nach einem der vorstehenden Ansprüche implementiert.

16. Drahtloser Leistungssender nach Anspruch 15, ferner umfassend eine Rückkopplungsschaltung (115), die mit der Spule gekoppelt und so konfiguriert ist, dass sie aktuelle Werte des Sendestroms und der Sendespannung misst.

17. Drahtloser Leistungssender nach Anspruch 15 oder Anspruch 16, wobei die Leistungswandlerschaltung einen Pulsweitenmodulations-, PWM-, Signalgenerator und einen DC-AC-Wandler umfasst, der über ein vom PWM-Signalgenerator erzeugtes PWM-Signal angesteuert wird, wobei das Steuern der Leistungswandlerschaltung das Steuern einer Frequenz oder eines Tastgrades des PWM-Signals umfasst.

**Revendications**

1. Procédé de mise en œuvre d'un émetteur d'énergie sans fil, le procédé comprenant les étapes suivantes :

- recevoir (1010) une instruction de commande d'énergie d'un récepteur d'énergie sans fil (120) couplé de manière inductive à l'émetteur d'énergie sans fil (110) ;
- établir (1020) une puissance d'émetteur cible pour l'émetteur d'énergie sans fil en fonction de l'instruction de commande d'énergie ;
- établir (1030) une variation de tension potentielle pour une tension d'émetteur de l'émetteur d'énergie sans fil en fonction de la puissance d'émetteur cible ;
- déterminer (1040) si une amplitude de la variation de tension potentielle est supérieure ou égale à une taille de palier discret d'une tension d'alimentation fournie par une alimentation électrique (101), l'alimentation électrique étant couplée à l'émetteur d'énergie sans fil et configurée pour fournir la tension d'alimentation à l'émetteur d'énergie sans fil ; et
- s'il est déterminé que l'amplitude de la variation de tension potentielle est supérieure ou égale à la taille de palier discret de la tension d'alimentation, ajuster une puissance d'émetteur de l'émetteur d'énergie sans fil par les opérations suivantes :

- régler (1110) la tension d'alimentation fournie par l'alimentation électrique sur une première valeur de tension en modifiant la tension d'alimentation d'un ou de plusieurs paliers discrets ;
- établir (1020) une première valeur d'intensité cible pour un courant d'émetteur de l'émetteur d'énergie sans fil en fonction de la puissance d'émetteur cible et de la première valeur de tension ; et

- commander (1130) un circuit de conversion d'énergie (111) de l'émetteur d'énergie sans fil en utilisant la première valeur d'intensité cible, le circuit de conversion d'énergie étant couplé à une bobine (119) de l'émetteur d'énergie sans fil, et étant configuré pour fournir une tension alternative à la bobine de l'émetteur d'énergie sans fil.

2. Procédé selon la revendication 1, dans lequel l'alimentation électrique est une alimentation électrique en courant continu configurée pour fournir une tension continue, et le circuit de conversion d'énergie est configuré pour convertir la tension continue fournie par l'alimentation électrique en la tension alternative appliquée à la bobine de l'émetteur d'énergie sans fil.

3. Procédé selon la revendication 2, dans lequel la tension continue fournie par l'alimentation en courant continu varie par paliers discrets et a une taille de palier discret.

4. Procédé selon la revendication 2 ou 3, dans lequel l'alimentation électrique est une alimentation du type port USB dédié à la charge.

5. Procédé selon la revendication 4, dans lequel la commande du circuit de conversion d'énergie comprend les étapes suivantes :

  - établir (2050) un signal d'erreur en calculant une différence entre la première valeur d'intensité cible et une valeur présente du courant d'émetteur ;
  - générer un signal de commande en traitant le signal d'erreur au moyen d'un bloc de commande Proportionnelle Intégrale Dérivée, PID, (2060) ; et
  - commander le circuit de conversion d'énergie (111) de l'émetteur d'énergie sans fil en utilisant le signal de commande.

6. Procédé selon l'une quelconque des revendications précédentes, dans lequel l'établissement de la variation de tension potentielle comprend les étapes suivantes :

  - obtenir des valeurs présentes pour le courant d'émetteur et la tension d'émetteur de l'émetteur d'énergie sans fil ;
  - diviser (2030) la puissance d'émetteur cible par la valeur présente du courant d'émetteur pour obtenir une tension cible potentielle pour l'émetteur d'énergie sans fil ; et
  - calculer (2040) une différence de tension entre la tension cible potentielle et la valeur présente de la tension d'émetteur.

7. Procédé selon la revendication 6, dans lequel le réglage de la tension d'alimentation comprend les étapes suivantes :

  - diviser la différence de tension par la taille de palier discret de la tension d'alimentation pour obtenir un premier nombre ;
  - arrondir le premier nombre pour obtenir un nombre entier qui est égal à ou immédiatement voisin du premier nombre ; et
  - décaler la tension d'alimentation du nombre entier de paliers discrets pour régler la tension d'alimentation sur la première valeur de tension.

8. Procédé selon l'une quelconque des revendications précédentes, comprenant en outre, s'il est déterminé que l'amplitude de la variation de tension potentielle est inférieure à la taille de palier discret de la tension d'alimentation, le fait d'ajuster la puissance d'émetteur de l'émetteur d'énergie sans fil par les opérations suivantes :

  - cumuler (1050) la variation de tension potentielle en additionnant la variation de tension potentielle à une valeur cumulée ; et
  - comparer (1050) la valeur cumulée avec la taille de palier discret de la tension d'alimentation.

9. Procédé selon la revendication 8, comprenant en outre, s'il est déterminé qu'une amplitude de la valeur cumulée est inférieure à la taille de palier discret de la tension d'alimentation :

  - maintenir la tension d'alimentation =- fournie par l'alimentation électrique inchangée à une valeur présente de la tension d'alimentation ;

- établir (1090) une deuxième valeur d'intensité cible pour le courant d'émetteur de l'émetteur d'énergie sans fil en fonction de la puissance d'émetteur cible et de la valeur présente de la tension d'alimentation ; et
- commander (1100) le circuit de conversion d'énergie de l'émetteur d'énergie sans fil en utilisant la deuxième valeur d'intensité cible.

10. Procédé selon la revendication 8 ou 9, comprenant en outre, s'il est déterminé qu'une amplitude de la valeur cumulée est supérieure ou égale à la taille de palier discret de la tension d'alimentation :

- régler (1070) la tension d'alimentation fournie par l'alimentation électrique sur une deuxième valeur de tension en décalant la tension d'alimentation de la taille du palier discret ;
- établir (1080) une troisième valeur d'intensité cible pour le courant d'émetteur de l'émetteur d'énergie sans fil en fonction de la puissance d'émetteur cible et de la deuxième valeur de tension ; et
- commander (1100) le circuit de conversion d'énergie de l'émetteur d'énergie sans fil en utilisant la troisième valeur d'intensité cible.

11. Procédé selon l'une quelconque des revendications précédentes, dans lequel le réglage de la tension d'alimentation et la commande du circuit de conversion d'énergie sont réalisés en même temps.

12. Procédé selon l'une quelconque des revendications précédentes, dans lequel le circuit de conversion d'énergie comprend un générateur de signaux à modulation d'impulsions en durée, MID, et un convertisseur continu-alternatif piloté par un signal MID produit par le générateur de signaux MID, dans lequel la commande du circuit de conversion d'énergie comprend le fait de commander une fréquence ou un rapport cyclique du signal MID.

13. Procédé selon l'une quelconque des revendications précédentes, dans lequel l'instruction de commande d'énergie comprend une demande provenant du récepteur d'énergie sans fil, dans lequel la demande indique un changement de pourcentage requis dans la puissance d'émission de l'émetteur d'énergie sans fil.

14. Procédé selon la revendication 13, dans lequel l'établissement de la puissance d'émetteur cible comprend les opérations suivantes :

- établir (2010) une valeur d'intensité modifiée en modifiant la valeur présente du courant d'émetteur par le changement de pourcentage indiqué dans l'instruction de commande d'énergie ; et
- multiplier (2020) la valeur d'intensité modifiée par une valeur présente de la tension d'émetteur de l'émetteur d'énergie sans fil.

15. Emetteur d'énergie sans fil comprenant :

- une bobine (119) ;
- un circuit de conversion d'énergie (111) couplé à la bobine, dans lequel le circuit de conversion d'énergie est configuré pour recevoir une tension continue d'une alimentation électrique (101) et pour convertir la tension continue en une tension alternative appliquée à la bobine, dans lequel la tension continue fournie par l'alimentation électrique est réglable par paliers discrets et a une taille de palier discret ;
- un circuit de communication (117) couplé à la bobine et configuré pour recevoir une instruction de commande d'énergie d'un récepteur d'énergie sans fil (120) ; et
- un contrôleur (113) couplé au circuit de conversion d'énergie et au circuit de communication, dans lequel le contrôleur est configuré pour mettre en œuvre le procédé de l'une quelconque des revendications précédentes.

16. Emetteur d'énergie sans fil selon la revendication 15, comprenant en outre un circuit de rétroaction (115) couplé à la bobine et configuré pour mesurer des valeurs présentes du courant d'émetteur et de la tension d'émetteur.

17. Emetteur d'énergie sans fil selon la revendication 15 ou 16, dans lequel le circuit de conversion d'énergie comprend un générateur de signaux à modulation d'impulsions en durée, MID, et un convertisseur continu-alternatif piloté par un signal MID produit par le générateur de signaux MID, dans lequel la commande du circuit de conversion d'énergie comprend le fait de commander une fréquence ou un rapport cyclique du signal MID.

Fig. 1

Fig. 2

330

111

$t_a^{(j)}$

$v^{(j)}$

2070

$v^{(j-1)} - S_v \cdot PID^{(j)}$

2060

$PID^{(j)}$

KP

KI

KD

2000

2050

$e^{(j)}$

2041

2042

$t_{d'}^{(j)}$

+

−

N

310

2010

320

$c$

$t_a^{(j)} * \left[1 + {c}/{128}\right]$

$t_d^{(j)}$

2020

$V_a^{(j)} * t_d^{(j)}$

$P_d^{(j)}$

2030

$P_d^{(j)} / t_a^{(j)}$

$V_d^{(j)}$

2040

$P_d^{(j)} / V_d^{(j)}$

Fig. 3

Fig. 4

EP 4 346 066 B1

Fig. 5

3000

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016006267 A1